Europäisches Patentamt

(19) European Patent Office

Office européen des brevets

(11) Veröffentlichungsnummer: **0 095 679**
**B1**

(12) ## EUROPÄISCHE PATENTSCHRIFT

(45) Veröffentlichungstag der Patentschrift:
05.02.86

(51) Int. Cl.⁴: **F 16 K  1/34, F 16 K  25/00**

(21) Anmeldenummer: **83105003.4**

(22) Anmeldetag: **20.05.83**

(54) **Dichtungsanordnung.**

(30) Priorität: **29.05.82  DE 3220481**

(43) Veröffentlichungstag der Anmeldung:
**07.12.83 Patentblatt 83/49**

(45) Bekanntmachung des Hinweises auf die Patenterteilung:
**05.02.86 Patentblatt 86/6**

(84) Benannte Vertragsstaaten:
**FR GB IT NL SE**

(56) Entgegenhaltungen:
**CH - A - 493 770**
**DE - C - 2 416 071**
**GB - A - 943 233**
**US - A - 4 105 187**

(73) Patentinhaber: **Klinger AG, Baarerstrasse 10,
CH-6301 Zug (CH)**

(72) Erfinder: **Huber, Richard, Dipl.-Ing., Fürstenstrasse 17b,
A-2340 Mödling (AT)**
Erfinder: **Wirz, Peter, Im Juch 733, Unterkulm (Aargau)
(CH)**

(74) Vertreter: **Dipl.-Ing. H. Marsch Dipl.-Ing. K. Sparing
Dipl.-Phys.Dr. W.H. Röhl Patentanwälte,
Rethelstrasse 123, D-4000 Düsseldorf (DE)**

LIBER, STOCKHOLM 1986

## Beschreibung

Die Erfindung betrifft eine Dichtungsanordnung für Absperrorgane mit einem dünnwandigen metallischen Wellkörper konischer Grundform, der an seinem den größeren Durchmesser aufwiesenden Ende mit dem Gehäuse des Absperrorganes dicht verbunden ist und in Schließstellung am Sperrglied des Absperrorganes mit zwei oder mehr Dichtungslinien anliegt. Bei Dichtungsanordungen dieser Art sind die Vorteile metallischer Dichtungen mit den Vorteilen von Weichstoffdichtungen kombiniert, insbesondere ist bei erhöhten Temperaturen eine gute Abdichtung bei relativ geringen Schließdrücken gegeben.

Bei bekannten Dichtungsanordnungen dieser Art, beispielsweise gemäß US-A- 4 105187, liegen in Schließstellung die wellen des Wellkörpers sowohl am Gehäuse als auch am Sperrglied des Absperrorganes an, wobei die Dichtheit durch die elastischen Eigenschaften des zwischen den beiden Teilen eingespannten Wellkörpers gesichert ist. Durch diese Elastizität können zwar in Schließstellung geringere Verschiebungen zwischen Sperrglied und Gehäuse des Absperrorganes ohne Dichtheitsverlust aufgenommen werden, für größere Verschiebungen zwischen diesen Teilen ist dies jedoch nicht gegeben.

Die Aufgabe der Erfindung besteht darin, eine sichere Dichtheit in Schließstellung auch dann zu erzielen, wenn zwischen Gehäuse und Sperrglied größere Verschiebungen auftreten, die durch druck- oder temperaturbedingte Verformungen des Gehäuses, des Sperrgliedes oder der mit diesem verbundenen Betätigungseinrichtung bedingt sein können.

Diese Aufgabe ist entsprechend dem kennzeichnenden Teil des Anspruchs 1 gelöst.

Unter der Schließkraft wird also der Wellkörper über seinen Umfang gedehnt und er ist daher elastischer als bei bekannten Ausführungen, wo nur die Wellenhöhe Einfluß auf die Größe der Elastizität hat. Der unter Schließkraft aufweitbare Metallring erhöht dabei die Festigkeit des Wellkörpers, damit er die Schließkraft aufnehmen kann. Weitere Ausgestaltungen der Erfindung sind in den Unteransprüchen festgehalten.

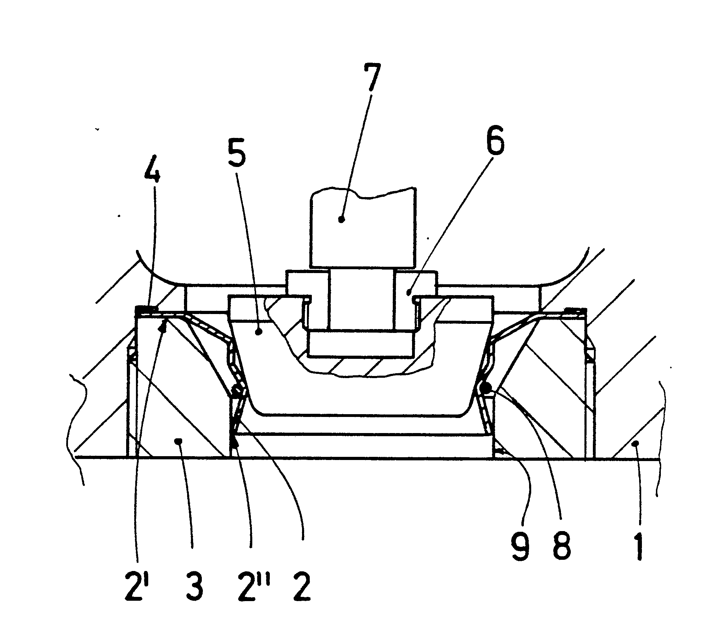

Die Erfindung wird nun anhand des in der beiliegenden Zeichnung dargestellten Ausführungsbeispiels näher erläutert.

Die Zeichnung zeigt die Dichtungsanordnung für ein Absperrventil mit einem Gehäuse 1, in dem ein dünnwandiger metallischer Wellkörper 2 dicht befestigt ist. Hierzu weist der den größeren Durchmesser aufweisende Endteil des Wellkörpers 2 einen flanschartigen Rand 2' auf, der unter Zwischenschaltung einer Flachdichtung 4 mit einem Schraubstock 3 festgeklemmt ist. Der Wellkörper 2 weist zwei Wellen auf, die in der dargestellten Schließstellung mit Linienberührung an einem Sperrglied 5 anliegen. Dieses ist mittels einer zweiteiligen Verschraubung 6 drehbar, aber axial unverschieblich, mit einer Ventilspindel 7 verbunden, welche das Sperrglied 5 in Schließstellung hält. Die dem freien Ende des Wellkörpers 2 benachbarte Dichtlinie ist durch einen endlosen Drahtring 8 unterstützt, der unter der Schließkraft gemeinsam mit dem Wellkörper 2 gedehnt und aufgeweitet ist, so daß die Dichtungslinie mit einer erhöhten Dichtkraft beaufschlagt ist.

Da der gesamte Wellkörper 2 gedehnt ist, kann er in Schließstellung vergleichsweise große Verschiebungen zwischen Gehäuse 1 und Sperrglied 5 ohne Verlust der Dichtkraft aufnehmen der Rand 2' des freien Endes des Wellkörpers 2 ist zusätzlich in einer Bohrung 9 des Schraubstückes 3 geführt, so daß Radialverlagerungen dieses Randes nicht möglich sind. Der Wellkörper 2 ist somit an einem Ende 2' festgehalten, am anderen Ende 2' verschieblich geführt. Es ist also bei Relativverschiebungen zwischen Gehäuse 1 und Sperrglied 5 eine Anpassung des Wellkörpers 2 weitgehend gesichert, ohne daß er zur Gänze aus seiner Lage gebracht werden kann. Da sich unter Schließkraft der freie Rand 2' des Wellkörpers 2 nach unten verschiebt, kann auch die Bohrung 9 dazu dienen, beim Wellkörper 2 eine progressive Federkennlinie zu erzielen, wenn sie nach unten konisch zulaufend ausgebildet ist. Bei Verschiebungen des freien Randes 2' nach unten wird dieser dann im Durchmesser verkleinert und/oder in seiner Bewegung nach unten behindert.

Es sei noch erwähnt, daß diese Bauweise nicht auf das dargestellte Hubventil beschränkt ist, sondern ebenso vorteilhaft bei Absperrorganen mit drehbarem Schaltglied wie Kugelhähnen oder Klappen verwendet werden kann, um die Relativverschiebungen zwischen Gehäuse und Sperrglied abdichtend aufnehmen zu können.

## Patentansprüche

1) Dichtungsanordnung für Absperrorgane mit einem Gehäuse (1), einem Sperrglied (5) und einem dünnwandigen metallischen Wellkörper (2) konischer Grundform, der an seinem den größeren Durchmesser aufweisenden Ende mit dem Gehäuse (1) dicht verun en ist un in Sc lie stel ung am Sperrgliedf (5) mit zwei oder mehr Dichtungslinien bildenden wellen anliegt, dadurch gekennzeichnet, daß der Wellkörper (2) mit seinen wellen am Gehäuse (1) nicht anliegt, wobei mindestens einer der die Dichtungslinien bildenden Wülste des Wellkörpers (2) durch einen unter Schließkraft aufweitbaren Metallring (8) unterstützt ist.

2) Dichtungsanordnung nach Anspruch 1, dadurch gekenn- zeichnet, daß der Metallring ein endloser Drahtring (8) ist, welcher in einer der Rillen der Außenwand des Wellkörpers (2) angeordnet ist.

3) Dichtungsanordnung nach Anspruch 1 oder 2, dadurch gekennzeichnet, daß der Rand des freien Endes (2') des Wellkörpers (2) in einer Bohrung (9) geführt ist.

4) Dichtungsanordnung nach einem der Ansprüche 1 bis 3, dadurch gekennzeichnet, daß das freie Ende (2') des Wellkörpers (2) in einen sich öffnenden Kegel ausläuft.

**0 095 679**

## Revendications

1. Dispsitif d'étanchéité pour organes d'arrêt comportant un corps (i), un obturateur (5) et un corps ondulé métallique à paroi mince (2) de forme de base conique qui à son extrémité de plus grand diamètre, est joint de manière étanche au corps (1) et, en position fermée s'appuie sur l'obturateur (5) par des ondes formant deux lignes d'étanchéité ou plus, caractérisé par le fait que le corps ondulé (2) ne s'appuie pas sur le corps (1) par ses ondes et au moins une des ondes du corps ondule (2) qui forment les lignes d'étanchéité est soutenue par un anneau métallique (8) pouvant s'élargir sous la force de fermeture.

2. Dispositif d'étanchéité selon la revendication 1, caractérisé par le fait que l'anneau métallique est un anneau en fil métallique fermé (8) qui est placé dans une des gorges de la paroi extérieure du corps ondulé (2).

3. Dispositif d'étanchéité selon l'une des reven- dications 1 et 2, caractérisé par le fait que le bord de l'extrémité libre (2') du corps ondulé (2) est guidé dans un alésage (9).

4. Dispositif d'étanchéité selon l'une des reven- dications 1 à 3, caractérisé par le fait que l'extrémité libre (2') du corps ondulé (2) se termine par un cône s'ouvrant.

## Claims

1. Sealing arrangement for shut-off devices having a housing (1), a blocking member (5) and a thin-walled metallic ridged member (2) having a conical basic shape which at its end having the larger diameter is connected in leakproof manner to the housing (1) and in the closed position lies with two or more ridges forming sealing lines adjacent the blocking member (5), characterised in that the ridged member (2) does not lie with its ridges adjacent the housing (1), at least one of the beads of the ridged member (2) forming the sealing lines being supported by a metal ring (8) that is expansible under closing pressure.

2. Sealing arrangement according to claim 1, characterised in that the metal ring is an endless wire ring (8) which is arranged in one of the grooves of the external wall of the ridged member (2).

3. Sealing arrangement according to claim 1 or 2, characterised in that the edge of the free end (2') of the ridged member (2) is guided in a bore (9).

4. Sealing arrangement according to one of claims 1 to 3, characterised in that the free end (2') of the ridged member (2) opens out into a diverging cone.

3